# EUROPÄISCHE PATENTANMELDUNG

(11) **EP 1 111 443 A1**
(43) Veröffentlichungstag der Anmeldung: **27.06.2001**
(21) Anmeldenummer: 99125515.9
(22) Anmeldetag: 21.12.1999
(51) Int. Cl.: G03B 13/08, H04N 5/232

(54) **Laufbildkamera mit einem durch ein Okular zu betrachtenden elekronischen Sucher**

(71) Anmelder: Denz, Peter, Dipl.-Ing., 81673 München (DE)
(72) Erfinder: Denz, Peter, Dipl.-Ing., 81673 München (DE)
(74) Vertreter: Puschmann, Heinz H., Dipl.-Ing.(FH)

(57) **Zusammenfassung**

Laufbildkamera mit einem ein Okular (19) aufweisenden Sucher und einer Anordnung zur Umwandlung des für den Sucher aus dem Hauptstrahlgang abgezweigten Lichtes mit Hilfe lichtelektrischer Sensoren (23;24;25) in elektrische Bildsignale, die auf einer Ausgabeeinheit (33) als Bild ausgegeben werden, das durch das Okular (19) betrachtet werden kann.

## Beschreibung

Die Erfindung betrifft eine Laufbildkamera mit einem ein Okular aufweisenden Sucher.

Bekanntlich verfügen Laufbildkameras zur Überprüfung des aufgenommenen Bildausschnitts über einen optischen Sucher ähnlich wie bei einer Spiegelreflexkamera. Von dem an einer Spiegelblende reflektierten Licht wird ein reelles Bild (Luftbild) erzeugt, das dann mit dem Auge durch ein in der Regel vergrößerndes Okular betrachtet wird.

Oft ist es wünschenswert, das Okular an anderer als der standardmäßigen Stelle der Laufbildkamera anzubringen, den seitlichen Abstand zwischen Okular und Kamera nämlich die Pupillenlage einzustellen, oder aber für Links-Äuger den Sucher auf die andere Kameraseite zu verlegen. Ferner gibt es Filmkassetten, bei deren Verwendung in Verbindung mit der Laufbildkamera eine Sucherlupenverlängerung notwendig ist. Bei bestimmten Kamerastellungen ist es vorteilhaft, wenn die Anordnung so getroffen ist, dass der Sucher geschwenkt werden kann.

Solche Sonderausführungen verlangen jedoch aufwendige Zwischenoptiken, die den Sucherstrahlengang entsprechend verlängern und umleiten. Neben verschiedenen Abbildungslinsen beinhaltet eine solche Zwischenoptik auch ein Pechan-Prisma, das dafür sorgt, dass in jeder Stellung des Suchers ein aufrecht stehendes scharfes Bild im Okular erscheint. Für die Verschiebung der Pupillenlage wird zudem ein exakt abgestimmtes Tandem-System benötigt.

Diese Zwischenoptiken sind groß, teuer, mechanisch aufwendig zu realisieren, und erhöhen das Gewicht der Kamera, was vor allem bei tragbaren Kameras unvorteilhaft ist. Schließlich ist bei optischen Suchern ein großer Aufwand erforderlich, dem Kameramann über die Einspiegelung von Betriebsdaten die wichtigsten Kameraparameter, wie z.B. Kamera läuft/steht, Restfilmlänge u.ä. mitzuteilen.

Der Erfindung liegt die Aufgabe zugrunde hier Abhilfe zu schaffen durch eine neue Anordnung zur Erzeugung des Sucherbildes bei einer Laufbildkamera.

Diese Aufgabe ist gemäß der Erfindung durch die Merkmale des Patentanspruchs 1 gelöst.

Weitere Merkmale der Erfindung ergeben sich aus den Unteransprüchen.

Durch die erfindungsgemäße Ausbildung einer Laufbildkamera mit einer Anordnung zur elektronischen Erzeugung des Sucherbildes in der Weise, dass in der Bildebene des Abbildungsobjektives lichtempfindliche Sensoren zur Umwandlung des jeweiligen Bildes in Bildsignale angeordnet sind und dass eine Anzeigevorrichtung zur Wiedergabe der Bildsignale vorgesehen ist, die über das Sucherokular zu betrachten ist, können die genannten Sonderausführungen verblüffend einfach realisiert werden und dem Kameramann bleibt verborgen, dass das mit dem Sucherokular betrachtete Sucherbild elektronisch übertragen wurde; er kann die Laufbildkamera wie gewohnt handhaben.

Eine solche Bildübertragung ist an sich bekannt. So werden bei TV- und Videokameras anstelle der Belichtung eines Films mit Hilfe eines oder mehrerer lichtempfindlicher Sensoren elektronische Bildsignale erzeugt und an einem Ausgang ausgegeben.

Diese Bildsignale werden gleichzeitig dafür verwendet, im Sucher der TV-Kamera auf einer Ausgabeeinheit ein Bild zu erzeugen, das dann durch ein Sucherokular betrachtet werden kann. Bei professionellen TV-Kameras wird als Ausgabeeinheit in der Regel eine Monochrom-Bildröhre verwendet, bei Videokameras für den Heimbereich kommen neben Bildröhren auch farbige LCD-Displays zum Einsatz.

Für die Produktion von Kinofilmen werden TV- und Videokameras nicht eingesetzt. Infolge der Aufteilung eines Bildes in Bildpixel kann nämlich mit solchen Kameras die Bildqualität von Laufbildkameras nicht erreicht werden.

Trotz der eingangs geschilderten Schwierigkeiten bei der Sucherausbildung werden jedoch in Verbindung mit Laufbildkameras seit deren Schaffung bis heute unverändert ausschließlich optische Sucher verwendet.

Dieses Vorurteil wird nunmehr durch den erfindungsgemäßen Ersatz der optischen Systeme für die Strecke zwischen Abbildungsobjektiv und Okular durch eine Übertragung der Bildsignale auf elektronischem Wege übernommen, was viele Vorteile schafft.

So können elektronische Sucher kleiner und leichter realisiert werden als optische und sind flexibler verstellbar. Für das Einblenden verschiedener Rahmen je nach Filmformat ist keine Mattscheibenmarkierung erforderlich, da sie elektronisch erfolgen kann. Alle Betriebsparameter der Kamera können auf einfache Weise in das Sucherbild eingeblendet werden. Im Sucher kann ein elektronischer Zoom realisiert werden. Das Sucherbild kann in einem weiten Bereich unabhängig von der Beleuchtung in Helligkeit und Kontrast eingestellt werden. Im Gegensatz zum optischen Sucher flackert das Bild bei niedrigen Bildraten nicht, da in der Dunkelphase des Suchers das letzte Bild weiter angezeigt werden kann. Durch die Verwendung lichtempfindlicher Sensoren kann der elektronische Sucher als interner Belichtungsmesser der Kamera verwendet werden, wodurch Fehlbelichtungen vermieden werden. Bei der Verwendung des elektronischen Suchers als Signalquelle für die Darstellung des jeweils aufzunehmenden Bildes auf einem externen Anzeigepult - als Video Assist bekannt geworden - für andere Personen als dem Kameramann, wird die Empfindlichkeit erhöht, da das Licht nicht mehr zwischen Video Assist und optischem Sucher aufgeteilt werden muss, wie dies bei der Anordnung nach dem Gebrauchsmuster G 92 12 425.9 der Fall ist.

Die Erfindung ist nachfolgend anhand eines mehr oder minder schematisch dargestellten Ausführungsbeispiels beschrieben. Es zeigen:
- Fig. 1: das Aufbauschema einer Laufbildkamera mit optischem Sucher nach dem Stande der Technik,
- Fig. 2: ein Aufbauschema einer Laufbildkamera mit verstellbarem optischem Sucher nach dem Stande der Technik,
- Fig. 3: ein Aufbauschema einer Vorrichtung zur elektronischen Erzeugung eines Sucherbildes bei Laufbildkameras gemäß der Erfindung,
- Fig. 4: ein schematische Darstellung einer Vorrichtung zur getrennten Aufnahme der Farbauszüge eines Farbbildes mit wellenlängenselektivem Strahlteiler und drei Sensoren und
- Fig. 5: ein Aufbauschema einer Vorrichtung zur Aufnahme eines Farbbilds über einen einzelnen Sensor mit Mosaikfilter.

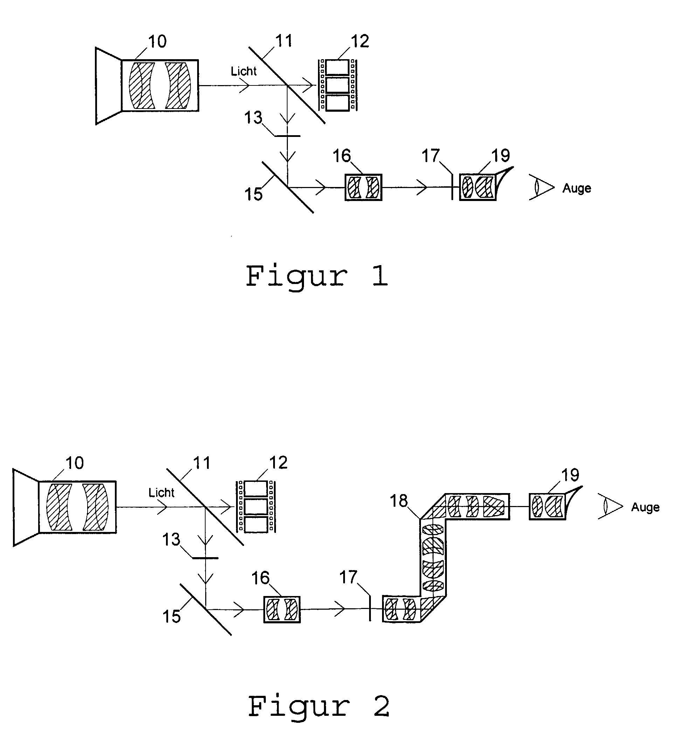

Um das Verständnis der Erfindung zu erleichtern, seien vorab anhand der Fig. 1 und 2 Laufbildkameras nach dem Stande der Technik erläutert.

Wie Fig. 1 zeigt, geht bei der Aufnahme des Bildes in einer Laufbildkamera Fig. 1 der Hauptstrahlengang vom Aufnahmeobjektiv 10 über eine Spiegelblende und/oder einen Strahlteiler 11 zum Film 12, auf dem ein reelles Bild der abzubildenden Szene erzeugt wird. Das von der Spiegelblende reflektierte und/oder über einen Strahlteiler abgezweigte Licht erzeugt ebenfalls ein reelles Bild auf einer Mattscheibe 14, die in gleichen optischen Abstand zum Aufnahmeobjektiv angeordnet ist wie der lichtempfindliche Film. Diese Mattscheibe kann zusätzliche Markierungen tragen, die der Einstellung des Bildausschnitts dienen. Von dem auf der Mattscheibe dargestellten Bild wird über Strahlteiler und/oder Umlenkspiegel 15 mittels eines Abbildungsobjektivs 16 ein reelles Bild 17, (auch Luftbild genannt) erzeugt, das dann mit dem Auge durch ein in der Regel vergrößerndes Okular 19 betrachtet wird.

Unter Berücksichtigung der unterschiedlichsten Anwendungsfälle einer Laufbildkamera muss das Okular an anderer Stelle der Laufbildkamera fest angeordnet oder flexibel eingestellt werden können. Dazu ist, wie Fig. 2 zeigt, zwischen das Luftbild 17 und das Okular 19 eine Zwischenoptik 18 (Fig. 2) eingefügt, die den Sucherstrahlengang entsprechend verlängert und umleitet.

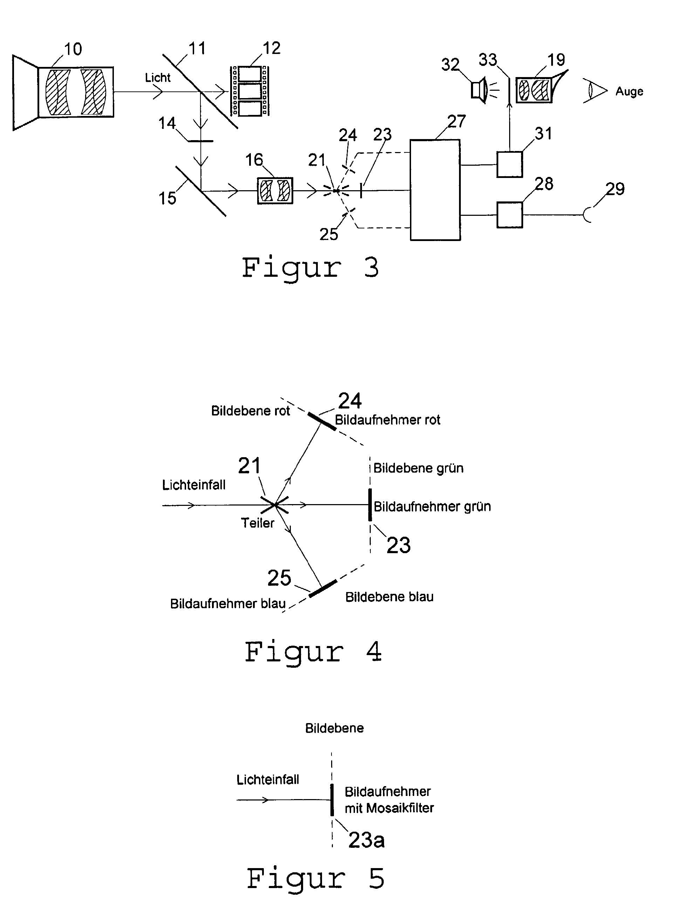

Diese aufwendigen optisch komplizierten und dementsprechend schweren Zwischenoptiken werden gemäß dem Ausführungsbeispiel nach Fig. 3 dadurch vermieden, dass eine elektronische Bildübertragung zwischen Abbildungsobjektiv 16 und einer bilderzeugenden Ausgabeeinheit 33 benutzt wird.

Hierzu werden, wie Fig. 3 zeigt, in der Bildebene des von dem Abbildungsobjektiv 16 erzeugten Luftbildes ein oder mehrere lichtempfindliche Sensoren, vorzugsweise Halbleitersensoren wie z.B. CCD- oder CMOS-Elemente angeordnet. Diese Sensoren bilden zusammen mit ihrer Bildaufnahme- und Bildverarbeitungselektronik 27 eine in die Laufbildkamera integrierte Videokamera, die nach ihrer Anordnung im Sucherzweig allgemein als Sucherkamera bezeichnet wird. Diese Sucherkamera besitzt entweder einen einzelnen Bildaufnehmer 23a, (Fig. 5) mit einem nicht dargestellten Mosaikfilter zur Aufnahme aller Farbauszüge gemeinsam oder einen farbselektiven Strahlteiler 21, (Fig. 4) und drei Bildaufnehmer 23 bis 25 zur getrennten Aufnahme vorzugsweise der Primärfarbauszüge des Bildes.

Die von der Sucherkamera erzeugten Bildsignale werden zum einen über eine Ausgangsstufe 28 zur Verstärkung und/oder normgerechten Ergänzung an analoge und/oder digitale Ausgänge 29 als normgerechtes Videosignale ausgegeben. Zum anderen werden aus diesen in einem Treiberbaustein 31 die zur Ansteuerung der Ausgabeeinheit 33, vorzugsweise eines Farb-LCDs erforderlichen Signale gewonnen. Das auf der Ausgabeeinheit dargestellte Bild wird von einer Lichtquelle 32 im Auf- oder Durchlicht beleuchtet und kann dann in gewohnter Weise durch das Sucherokular 19 betrachtet werden.

## Patentansprüche

1. Laufbildkamera mit einem Aufnahmeobjektiv (10) zur Erzeugung eines reellen Bildes auf einem Film (12) sowie mit einem über eine Spiegelblende oder einen Strahlteiler (11) in den Hauptstrahlengang eingreifenden Abbildungsobjektiv (16) zur Erzeugung eines über ein Sucherokular (19) zu betrachtenden Sucherbildes, mit der Bildebene des Abbildungsobjektivs zugeordneten lichtempfindlichen Sensoren (23-25) zur Umwandlung des jeweiligen Bildes in Bildsignale und mit einer der Wiedergabe der Bildsignale dienenden Monochrom- oder Color-Anzeigevorrichtung (33), der für die Betrachtung das Sucherokular (19) zugeordnet ist.

2. Laufbildkamera nach Anspruch 1, **dadurch gekennzeichnet,** dass die in der Bildebene des Abbildungsobjektiv (16) angeordneten lichtempfindlichen Sensoren (23-25) CCD- oder CMOS-Elemente sind, die Teile einer als Videokamera ausgebildeten Sucherkamera bilden.

3. Laufbildkamera nach Anspruch 1 oder 2, **dadurch gekennzeichnet,** dass die Sensoren (23-25) drei vorzugsweise den Primärfarben RGB zugeordnete Bildaufnehmer sind, die die Lichtstrahlen über einen farbselektiven, im Strahlengang des Abbildungsobjektivs (16) angeordneten Strahlteiler (21) aufnehmen.

4. Laufbildkamera nach Anspruch 1 oder 2, **dadurch gekennzeichnet,** dass als Sensor ein einzelner mit einem farbselektiven Mosaikfilter versehener Bildaufnehmer (23a) vorgesehen ist.

5. Laufbildkamera nach den Ansprüchen 1 bis 4, **dadurch gekennzeichnet,** dass die Anzeigevorrichtung (33) eine von einer Lichtquelle (32) beleuchtete Flüssigkristallanzeige ist.

6. Laufbildkamera nach einem oder mehreren der vorhergehenden Ansprüche, **dadurch gekennzeichnet,** dass dem die Bildsignale verarbeitenden Modul (27) der Videokamera analoge und/oder digitale Videoausgänge (29) zugeordnet sind zwecks Anschluß eines Monitors und/oder anderer videotechnischer Geräte.
